# EUROPEAN PATENT SPECIFICATION

(11) **EP 2 123 150 B1**
(45) Date of publication and mention of the grant of the patent: **17.11.2010**
(21) Application number: 09075226.2
(22) Date of filing: 12.05.2009
(51) Int. Cl.: A01K 1/00, A01K 1/02, A01K 1/015

(54) **Pig stable installation in particular the breeding stall thereof.**
Stallanlage für Schweine, insbesondere ein Zuchtstall dafür
Installation d'écurie pour porcs en particulier la stalle de reproduction correspondante

(30) Priority: 20.05.2008 NL 1035447
(43) Date of publication of application: 25.11.2009
(73) Proprietor: J.H.E. van Schriek Beheer B.V., 7039 CA Stokkum (NL)
(72) Inventor: Van Schriek, Johannes Hendrikus Engelbertus, 7039 CA Stokkum (NL)
(74) Representative: Lips, Hendrik Jan George

(56) References cited:
- DE-A- 3 210 271
- NL-C- 1 020 826
- US-A- 3 749 060
- US-A- 4 252 082

## Description

The invention relates to a pig stable installation and in particular the breeding stall thereof, means being present for constricting the place where the brood sow can be present, said place where said brood sow can lie having the shape of a floor plate, an air duct being present below said floor plate through which air can flow for regulating the temperature of said floor plate.

Such an installation is known by US 3 749 060. In this installation use is made of a substantially circular plate on which the sow as well as the piglets can be present. So the floor plate, on which the sow is present, is forming part of said circular plate, said plate as well forming the upper surface of the air duct through which air can flow for regulating the temperature of said circular plate.

A disadvantage of this is, that the temperature of the circular plate will be substantially equal over its total surface.

Now it is desirable that, in the interest of the piglets, said temperature is higher than 30 °C, in particular during the first days of their live.

It appeared, however, that by this temperature the sow does not feel itself comfortable. This appears from the fact that the sow eats relatively little, to wit not more or even less than before the birth of the piglets. In connection with the production of milk, necessary for the piglets, it is, however, desirable that the sow eats a few times more than before that time.

Now it was noticed that for the brood sow it is important that the temperature is lower than the temperature by which the piglets are growing the best. A favourable temperature for the sow being about 18 °C. In case of this temperature it appears that the sow is much more full of live and eats more so that a sufficient amount of milk is produced for feeding the piglets.

Obviously the high temperature required for the piglets is not suitable for the well-being of the sow.

Now the object of the invention, as defined in claim 1, is to raise this difficulty and to that end provides for that the part of said plate, so the floor plate forming the lying place for the sow, is forming the upper surface of said air duct, said air duct further being limited by substantially vertical walls, extending downwards from the longitudinal edges of said floor plate and being connected to each other near the lower edges by a bottom plate, such that this air duct is separated from an air channel taking care for maintaining the part of said plate, where the piglets can be present, at the desired environment temperature.

It will be provided for that the air, being transported through said air duct can have a temperature lower than 18°C.

Obviously the temperature of the air, flowing through said air duct, will have to be such low, that the floor plate can be cooled down till a temperature of 18°C either lower, such that via said floor plate the body temperature of the sow can be decreased and so can be lower than the environment temperature, while the piglets are present in an area with a substantially higher temperature.

In this way the well-being of the brood sow and also of the piglets can be considerably improved.

It is preferred that the installation is executed such, that the air flow through said air duct, present below said floor plate, is directed in longitudinal direction of said floor plate and is directed towards the snout of the sow when this is present on the floor plate.

In case of this the floor plate can be provided with means, near the head of said sow, for draining off at least a part of said air out off said air duct.

By this heat can be withdrawn from the head and possibly from the neck of said sow, while nevertheless the temperature is held at the desired high value in the area of the piglets.

It is remarked that the temperature of said floor plate will become higher when the sow is going to lie on this. If said floor plate should be insulated said temperature might increase up to 37 °C. So in case of a temperature lower than 37 °C of the air flowing through said duct heat exchange can take place. By a lower temperature the heat exchange will be increased. At the time that the sow is not lying on the floor plate the air will withdraw less heat from said floor plate. By this the forming of condensate will be prevented.

It is pointed to NL 1 020 826 C in which is indicated that said air duct might extend below said sow whilst said floor plate can be provided with means, near the head of said sow, for draining off at least a part of said air out off said air duct.

In this case, however, said sow and said piglets are present on one and the same plate. So there will be hardly any difference in temperature in the area of said sow and said piglets.

It is remarked that when a forced watercooled system should be used, said floor plate should be cooled very much in the last mentioned case.

On the one side said air duct is shaped by said floor plate and it will be preferred that the other part of said air duct is produced from a more or less isolating material, such as a plastic or such like material. By this it is more or less prevented, that the temperature of the air in said air duct is influenced by the temperature of the environment.

In a way known per sé a grid floor can be present along one longitudinal side of said floor plate, on which grid floor the piglets can be present. In a way known per sé, near this part the temperature of the area around the piglets will be held at the desired temperature. For this use can be made of another air channel.

Further it is remarked that in case of the installation according to the US patent, mentioned above, use is made of a heat radiating lamp, being provided in a part of the area. It is stated that the piglets will move towards said area. It might be possible that then the temperature of said round plate might be held low, which should be favourable for said sow, however, said piglets will be present on the cold surface during a large period of time, with all disadvantages of this.

The invention is further elucidated by means of an embodiment, shown in the drawing, in which:
Fig. 1 schematically shows a perspective view of an installation according to the invention in which, however, for clearness sake, the floor plate and the means for limiting the lying place of the sow, are removed;
Fig. 2 schematically shows a cross section according to the line II - II of fig. 1 with mounted floor plate; and
Fig. 3 schematically shows a cross section according to the line III - III of fig. 1 also with mounted floor plate.

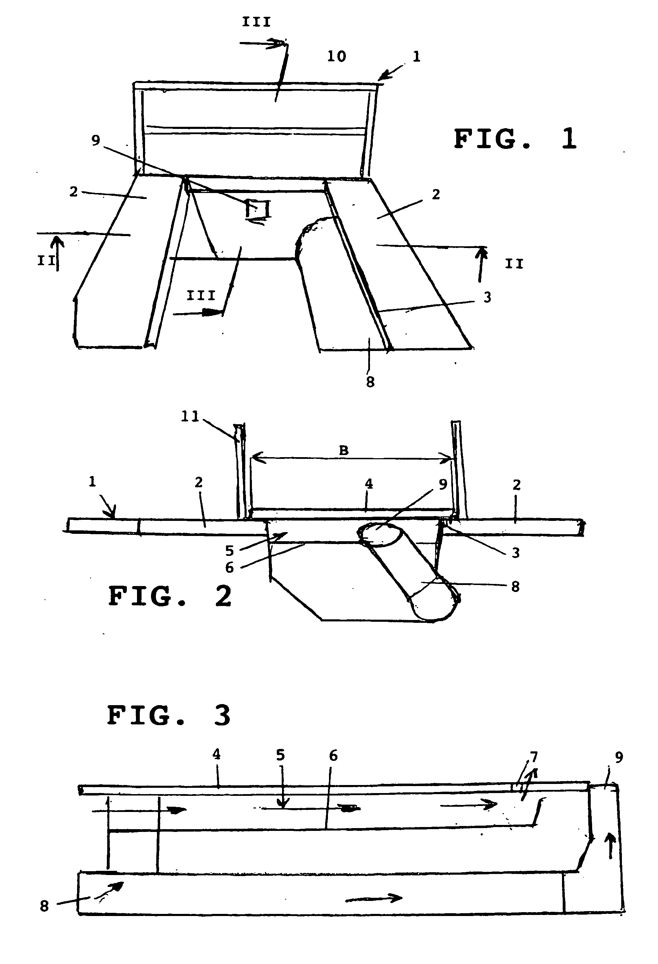

Fig. 1 shows an installation 1 comprising two grid floors 2 extending parallel to each other and resting on a support construction 3, from which only some parts are shown in the drawing.

Said support construction 3 serves as well for supporting the floor plate 4, in particular shown in the figures 2 and 3, which over its greatest part is closed, as described above, and which is fabricated from a good heat transferring material, such as e.g. cast iron.

Generally speaking said floor plate will have a width B of about 60 cm and a length of about 100 cm, see fig. 2.

An air duct 5 is present below the floor plate 4 and so is formed by said floor plate 4 at its upper side and at its other sides by a more or less isolating material 6. The cross section of said air duct 5 need not to be rectangular but can have another shape as well, such as that of half a circle.

The air duct 5 ends about at the place of the head of the sow when this is lying on the floor plate 4. Possibly there a part of the air can flow out off the duct 5 upwards. To this end there the floor plate 4 can be provided with one or more outlet openings 7. Possibly here a part of said floor plate can be replaced by a grid floor. The air can be drained off in an other way too.

Further an air channel 8 is present below said floor plate 4, embouching in an opening 9, present near the snout of said sow.

Further fig. 1 schematically shows a part 10 of the means for constricting the lying place where the sow and the piglets can be present, to wit the part near the head of the sow. Further fig. 2 schematically shows the parts 11, constricting said lying place in transverse direction.

Generally speaking the means 10 and 11 are formed in a way known per sé by a railing. By this a good contact remains possible between said sow and said piglets.

Finally it is remarked that the floor plate 4 can be provided with ribs for increasing the heat-transfer from the air flowing through said air duct 5 to said floor plate 4.

Obviously only one possible embodiment of an installation according to the invention is shown in the drawing and is described above, many modifications being possible without leaving the scope of the invention, as defined in the claims.

## Claims

1. Pig stable installation and in particular the breeding stall (1) thereof, means (10) being present for constricting the place where the brood sow can be present, said place where said brood sow can lie having the shape of a floor plate (4), an air duct (5) being present below said floor plate (4) through which air can flow for regulating the temperature of said floor plate (4), **characterized in that** the part of said plate (4), so the floor plate (4) forming the lying place for the sow, is forming the upper surface of said air duct (5), said air duct further being limited by substantially vertical walls, extending downwards from the longitudinal edges of said floor plate (4) and being connected to each other near the lower edges by a bottom plate, such that this air duct (5) is separated from an air channel taking care for maintaining the part of said plate, where the piglets can be present, at the desired environment temperature.

2. Pig stable installation according to claim 1, **characterized in that** the air which is transported through said air duct (5) can have a temperature lower than 18 °C.

3. Pig stable installation according to claim 1 or 2, **characterized in that** the air flowing through said air duct (5), present below said floor plate (4), is directed in longitudinal direction of said sow and towards the snout of said sow when said sow is present on said floor plate (4).

4. Pig stable installation according to one of the preceding claims, **characterized in that** said floor plate (4), near the head of the sow, is provided with means (7) for draining off at least a part of the air out off said air duct (5).

5. Pig stable installation according to one of the preceding claims, **characterized in that** the further part (6) of said air duct (5) is fabricated of a more or less isolating material, such as a plastic or a such like material.

## Patentansprüche

1. Schweinestallinstallation, insbesondere dessen Aufzuchtbox (1), wobei Mittel (10) zum Beschränken des Raumes vorgesehen sind, in dem die Aufzuchtsau sich aufhalten kann, wobei der Raum, wo die Aufzuchtsau sich hinlegen kann die Form einer Bodenplatte (4) aufweist, wobei ein Luftkanal (5) sich unterhalb der Bodenplatte (4) befindet, durch den Luft zum Steuern der Temperatur der Bodenplatte (4) fließen kann, **dadurch gekennzeichnet, dass** der Teil der Platte (4), bei dem die Bodenplatte (4) die Liegefläche für die Sau bildet, eine obere Fläche des Luftkanals (5) bildet, der Luftkanal weiterhin von im wesentlichen vertikalen Wänden begrenzt ist, die sich von längsgerichteten Kanten der Bodenplatte (4) nach unten erstrecken und miteinander im Bereich der unteren Kanten der Bodenplatte verbunden sind, so dass dieser Luftkanal (5) von einem Luftschacht getrennt ist, der zur Aufrechterhaltung des Teils der Platte, wo die Ferkel sich aufhalten, bei einer gewünschtene Umgebungstemperatur, vorgesehen ist.

2. Schweinestallinstallation nach Anspruch 1, **dadurch gekennzeichnet, dass** die Luft, die durch den Luftkanal (5) transportiert wird, eine Temperatur unterhalb von 18°C haben kann.

3. Schweinestallinstallation nach Anspruch 1 oder 2, **dadurch gekennzeichnet, dass** die Luft, die durch den Luftkanal (5) fließt, der sich unterhalb der Bodenplatte (4) befindet, in Längsrichtung der Sau geleitet wird und in Richtung der Schnauze der Sau, wenn die Sau sich auf der Bodenplatte (4) aufhält.

4. Schweinestallinstallation nach einem der vorgehenden Ansprüche, **dadurch gekennzeichnet, dass** die Bodenplatte (4) in der Nähe des Kopfes der Sau mit Mitteln (7) versehen ist zum Absaugen wenigstens eines Teils der Luft aus dem Luftkanal (5).

5. Schweinestallinstallation nach einem der vorgehenden Ansprüche, **dadurch gekennzeichnet, dass** der weitere Teil (6) des Luftkanals aus einem mehr oder weniger isolierendem Material, wie Kunststoff oder derartigem Material, gefertigt ist.

## Revendications

1. Installation de porcherie, et en particulier la pouponnière (1) de celle-ci, présentant des moyens (10) pour limiter l'aire disponible pour la truie nourrice, ladite aire sur laquelle ladite truie peut s'étendre ayant la forme d'une plaque de plancher (4) un conduit de ventilation (5) étant disposé en dessous de ladite plaque de plancher (4), à travers lequel peut s'écouler de l'air destiné à réguler la température de ladite plaque de plancher (4), **caractérisée en ce qu'**une partie de ladite plaque (4), à savoir la plaque de plancher (4) formant l'aire de couchage de la truie, forme la surface supérieure dudit conduit de ventilation (5), ledit conduit de ventilation étant en outre limité par des parois sensiblement verticales s'étendant vers le bas à partir des bords longitudinaux de ladite plaque de plancher (4) et reliées entre elles à proximité des bords inférieurs par une plaque inférieure, de sorte que ce conduit de ventilation (5) est séparé d'un canal de ventilation conçu pour maintenir à la température ambiante voulue la partie de ladite plaque destinée aux porcelets.

2. Installation de porcherie selon la revendication 1, **caractérisée en ce que** l'air qui est acheminé à travers ledit conduit de ventilation (5) peut avoir une température inférieure à 18°C.

3. Installation de porcherie selon la revendication 1 ou 2, **caractérisée en ce que** l'air s'écoulant à travers ledit conduit de ventilation (5) disposé en dessous de ladite plaque de plancher (4) est acheminé dans un sens longitudinal par rapport à ladite truie et vers le groin de ladite truie quand ladite truie est présente sur ladite plaque de plancher (4).

4. Installation de porcherie selon l'une quelconque des revendications précédentes, **caractérisée en ce que** ladite plaque de plancher (4), à proximité de la tête de la truie, est dotée de moyens (7) conçus pour drainer au moins une partie de l'air hors dudit conduit de ventilation (5).

5. Installation de porcherie selon l'une quelconque des revendications précédentes, **caractérisée en ce que** la partie supplémentaire (6) dudit conduit d'aération (5) est faite d'un matériau plus ou moins isolant, tel qu'une matière plastique ou similaire.
